# EUROPÄISCHE PATENTSCHRIFT

(11) **EP 0 959 346 B1**
(45) Veröffentlichungstag und Bekanntmachung des Hinweises auf die Patenterteilung: **14.06.2006**
(21) Anmeldenummer: 99107213.3
(22) Anmeldetag: 14.04.1999
(51) Int. Cl.: G01N 23/223

(54) **Simultanes Röntgenfluoreszenz-Spektrometer**
Simultaneous X-ray fluorescent spectrometer
Spectromètre fluoroscopique aux rayons X simultané

(30) Priorität: 09.05.1998 DE 19820861
(43) Veröffentlichungstag der Anmeldung: 24.11.1999
(73) Patentinhaber: Bruker AXS GmbH, 76187 Karlsruhe (DE)
(72) Erfinder: Golenhofen, Rainer, 76275 Ettlingen (DE)
(74) Vertreter: Kohler Schmid Möbus

(56) Entgegenhaltungen:
- EP-A- 0 340 915
- EP-A- 0 600 334
- WO-A-97/02481
- WO-A-97/05474
- AT-B- 375 189
- DD-A- 271 570
- DE-A- 4 214 840
- US-A- 5 206 708

## Beschreibung

Die Erfindung betrifft ein Spektrometer zur simultanen Messung mehrerer Spektrallinien von einer Meßprobe mit mehreren Wellenlängenselektoren, die jeweils Licht einer bestimmten Wellenlänge selektiv einem Detektor zuführen, wobei in der Regel jeder Wellenlängenselektor eine andere Wellenlänge selektiert.

Ein solches Mehrkanal-Spektrometer ist beispielsweise das Gerät "MRS 4000" der Firma Bruker AXS GmbH (siehe Handbuch "Mehrkanal-Röntgenspektrometer MRS 4000" aus dem Jahre 1997) .

Zur Untersuchung der optischen Eigenschaften von Meßproben, insbesondere zur Feststellung der chemischen Zusammensetzung aufgrund von spezifischen, optischen Eigenschaften der verschiedenen Atome und Moleküle wird eine Vielzahl unterschiedlichster Spektrometer eingesetzt, die in Wellenlängenbereichen vom fernen Infrarot über den sichtbaren Bereich bis hin zum Bereich der Röntgenstrahlung arbeiten. Allen diesen Spektrometern ist gemeinsam, daß die zu untersuchende Meßprobe mit dem Licht einer oder mehrerer Wellenlängen betrahlt wird und entweder in Transmission oder in Reflektion das durch die Probe veränderte Licht, das die Eigenschaften der Probe anzeigt, detektiert und spektral ausgewertet wird.

Um eine spektrale Auflösung der detektierten Meßsignale zu erhalten, werden bislang zwei alternative Methoden eingesetzt, nämlich die Verwendung einer energiedispersiven Anordnung oder die Verwendung einer wellenlängendispersiven Anordnung.

Ein energiedispersives Spektrometer weist in der Regel nur einen einzigen Detektor auf, der direkt die von der Probe stammende zu untersuchende Strahlung aufnimmt. Da der Detektor "direkt auf die Probe schaut" nimmt er nicht nur die interessierende "Nutzstrahlung" auf, sondern er sieht auch die gesamte Untergrund- und Störstrahlung. Insbesondere wird der Detektor oftmals stark durch die Strahlung der Hauptelemente der Probe belastet, die manchmal gar nicht analysiert werden sollen, weil sie ohnehin bekannt sind. Dadurch verschwinden die Signale der eigentlich interessierenden Elemente in dem hohen detektierten Hintergrund- bzw. Untergrundsignal. Ein derartiges energiedispersives Spektrometer weist daher nur eine kleine Auflösung und eine hohe Nachweisgrenze auf und ist relativ leistungsschwach.

Alternativ dazu werden wellenlängendispersive Spektrometer eingesetzt, wie beispielsweise das eingangs zitierte Mehrkanal-Röntgenspektrometer "MRS 4000". Diese Geräte weisen eine Vielzahl von Analysatoren und Detektoren auf, wobei für jedes zu messende Element ein eigener Analysatorkristall und ein eigener Detektor vorgesehen ist. Dadurch können die Signale auf den verschiedenen Wellenlängen simultan aufgenommen werden. Die wellenlängendispersiven Spektrometer sind daher sehr leistungsstark und weisen eine hohe Auflösung auf.

Nachteilig ist jedoch der erforderliche große Aufwand aufgrund der vielen Detektoren und zugehörigen Meßelektroniken für jeden Wellenlängenbereich sowie die erhöhte Störanfälligkeit aufgrund der Vielzahl hochempfindlicher Komponenten. Insbesondere die erforderliche große Menge an Detektoren und jeweils zugehöriger unabhängiger Meßelektronik machen derartige Spektrometer auch recht teuer.

Aus der WO 97/05474 wiederum ist ein wellenlängendispersives Röntgenfluoreszenz-Spektrometer bekannt, bei dem für mehrere Analysatoren, die in verschiedenen Wellenlängenbereichen arbeiten, jeweils nur ein einziger Detektor vorgesehen ist. Allerdings ermöglicht dieses Spektrometer keine simultanen Messungen des Lichts aus sämtlichen Analysatoren, sondern der Detektor kann nur das Licht aus einem einzigen Analysator aufnehmen. Durch eine entsprechende Mechanik werden bei diesem Gerät die verschiedenen Monochromatoren, die jeweils aus einem fokussierenden Analysatorkristall mit Ein- und Austrittsspalt bestehen, nacheinander zwischen die Meßprobe und den Detektor gebracht und so sukzessive die einzelnen Teile des späteren Spektrums aufgenommen.

Nachteilig bei dieser Anordnung ist einerseits die sequentielle Möglicheit immer nur einer einzigen Spektrallinie, was dazu führt, daß das Spektrometer verglichen mit anderen bekannten wellenlängendispersiven Anordnungen wie beispielsweise dem oben zitierten "MRS 4000" äußerst langsam arbeitet. Obwohl für eine Vielzahl von unterschiedlichen Wellenlängenbereichen derselbe Detektor verwendet wird, wird dessen in der Regel natürlicherweise vorhandene Energiedispersion aber dennoch nicht ausgenutzt. Weiterhin ist bei dem Gerät nach der WO 97/054 74 der hohe mechanische Aufwand aufgrund der beweglichen Anordnung nachteilig, wobei die komplizierte Mechanik in der Praxis auch häufig zu Betriebsstörungen führen wird.

Aufgabe der vorliegenden Erfindung ist es demgegenüber, ein Spektrometer zur simultanen Messung mehrerer Spektrallinien vorzustellen, das die eingangs beschriebenen Merkmale verwirklicht, wobei einerseits die hohe Auflösung bekannter wellenlängendispersiver Anordnungen bei relativ kurzen Meßzeiten aufgrund von Simultanmessungen verschiedener Wellenlängenbereiche erreicht werden soll, andererseits aber der apparative Aufwand, insbesondere die Anzahl der Detektoren und zugehörigen Meßelektroniken deutlich reduziert wird, ohne dafür einen erheblich höheren apparativen Aufwand im mechanischen Bereich treiben zu müssen.

Erfindungsgemäß wird diese Aufgabe auf ebenso überraschend einfache wie wirkungsvolle Art und Weise dadurch gelöst, daß mindestens zwei verschiedene Wellenlängenselektoren demselben Detektor Licht von der Meßprobe zuführen können, und daß der Detektor energiedispersiv ist und ein ausreichend großes Auflösungsvermögen besitzt, um das detektierte Licht der verschiedenen Wellenlängen aus den mindestens zwei verschiedenen Wellenlängenselektoren energiemäßig zu trennen.

Bei dem erfindungsgemäßen Spektrometer wird also zunächst wie bei einem herkömmlichen wellenlängendispersiven Spektrometer über einzelne Wellenlängenselektoren nur die charakteristische Strahlung der zu analysierenden Elemente aus der von der Probe stammenden Gesamtstrahlung selektiert. Anschließend werden dann aber mehrere charakteristische Linien gleichzeitig von einem einzigen Detektor energiedispersiv verarbeitet, wodurch sich die Anzahl der Detektoren im Vergleich zu einem herkömmlich simultan arbeitenden wellenlängendispersiven Spektrometer zumindest um den Faktor 2, bei Ausführungsbeispielen aber auch um einen höheren Faktor reduzieren läßt. Im Gegensatz zu einem rein energiedispersiven Spektrometer gelangt beim erfindungsgemäßen Spektrometer kaum Untergrundstrahlung in den Detektor und der Detektor wird nicht durch einen Hauptbestandteil der von der Probe stammenden Strahlung überlastet, was die Zählstatistik für die übrigen interessierenden Elemente wesentlich verbessert. Im Prinzip werden mit der Erfindung die positiven Eigenschaften eines wellenlängendispersiven Simultanspektrometers durch die Zusammenführung mehrerer wellenlängendispersiv getrennter Linien auf einem einzigen Detektor mit den Vorteilen einer herkömmlichen energiedispersiven Anordnung kombiniert, ohne deren Nachteile in Kauf nehmen zu müssen.

Bei einer besonders bevorzugten Ausführungsform ist das erfindungsgemäße Spektrometer ein Röntgenfluoreszenz-Spektrometer, wobei das von der Meßprobe detektierte Licht Röntgenfluoreszenzlicht ist. Speziell für diesen Einsatzzweck wurde das erfindungsgemäße Spektrometer entwickelt, wobei sich aber der oben geschilderte Grundgedanke einer Kombination der positiven Eigenschaften eines energiedispersiven Spektrometers und einer wellenlängendispersiven Anordnung durchaus auch auf andere Wellenlängenbereiche übertragen läßt.

Falls relativ preisgünstige Detektoren verwendet werden sollen, die keine allzu große Energieauflösung aufweisen, ist es vorteilhaft, mehrere Detektoren vorzusehen, die jeweils nur von wenigen, im einfachsten Fall von nur zwei verschiedenen Wellenlängenselektoren Licht aus der Meßprobe zugeführt bekommen. Selbst bei einer relativ geringen Energieauflösung des Detektors wird es immer möglich sein, aus den interessierenden zwei geeignete charakteristische Linien (bzw. schmale Wellenlängenbereiche) auszuwählen, die weit genug auseinanderliegen, um auch von einem Detektor geringer Energieauflösung sicher getrennt zu werden.

Im Extremfall können aber auch alle interessierenden charakteristischen Linien von nur einem einzigen Detektor mit entspechend hoher Auflösung verarbeitet werden. Dieser sollte dann eine Energieauflösung ΔE < 200eV, vorzugsweise ΔE < 30eV bei jeweils E = 5,9keV besitzen.

Vorteilhafterweise werden die Bauteile des erfindungsgemäßen Spektrometers so ausgewählt, daß das Auflösungsvermögen der Wellenlängenselektoren höher ist als das Auflösungsvermögen des jeweils zugeordneten Detektors. Dadurch können relativ eng begrenzte Wellenlängenbereiche innerhalb eines breiteren Energieauflösungsbereichs eines nicht allzu teueren Detektors so untergebracht werden, daß sie vom Detektor simultan getrennt wahrgenommen werden.

Bei einer besonders kostensparenden Ausführungsform des erfindungsgemäßen Spektrometers sind die verschiedenen Wellenlängenselektoren im wesentlichen in einer Ebene sternförmig um eine Achse zwischen Meßprobe und Detektor angeordnet. Diese räumliche Anordnung nutzt den zur Verfügung stehenden Platz optimal aus, so daß diese Ausführungsform des Spektrometers auch besonders kompakt gebaut werden kann.

Bei einer bevorzugten Ausführungsform des erfindungsgemäßen Spektrometers umfaßt ein Wellenlängenselektor eine fokussierende Optik mit einem Eintrittsspalt, einem Analysatorelement und einem Austrittsspalt.

Bei Weiterbildungen dieser Ausführungsform können die Analysatorelemente übliche Einkristalle sein.

Alternativ können bei anderen Weiterbildungen die Analysatorelemente aber auch Multilayer-Strukturen sein.

Vorzugsweise werden die Analysatorelemente eine konkave Krümmung aufweisen und damit forkussierende Eigenschaften im Hinblick auf eine Abbildung des Eintrittsspaltes auf den Austrittsspalt aufweisen.

Bei besonders einfach aufgebauten Anordnungen weisen mehrere Wellenlängenselektoren, die demselben Detektor zugeordnet sind, einen gemeinsamen Austrittsspalt auf. Der Eintrittsspalt wird allerdings in der Regel für jeden Wellenlängenselektor unterschiedlich sein.

Besonders bevorzugt ist eine Variante, bei der mindestens ein Wellenlängenselektor ein Absorberelement aufweist. Dadurch kann die Intensität besonders starker Linien bei maximaler Probenanregung durch die Röntgenröhre herabgesetzt werden, so daß auch die Zählstatistik für viel schwächere Linien, die simultan auf demselben Detektor gemessen werden, ausreichend gut bleibt.

Daher werden bei einer Weiterbildung dieser Ausführungsform die Absorberelemente so ausgelegt sein, daß die Intensitäten des durchgelassenen Lichtes aller demselben Detektor zugeordneten Wellenlängenselektoren sich um maximal eine Größenordnung unterscheiden. Auf diese Weise wird der dynamische Bereich des Detektors nicht überbeansprucht und schwächere Linien gegenüber stärkeren Linien relativ hervorgehoben, was zu einer erheblichen Verbesserung der Zählstatistik der schwächeren Linien beiträgt.

Bei preiswerten Ausführungsformen des erfindungsgemäßen Spektrometers, die keinen allzu hohen apparativen Aufwand erfordern, sind zwischen 4 und 10 Wellenlängenselektoren vorgesehen. Denkbar sind aber auch Ausführungsformen, die erheblich mehr Wellenlängenselektoren aufweisen, beispielsweise bis zu 28, wie auch das oben zitierte Gerät "MRS 4000" aus dem Stand der Technik, das jedoch ebenso viele Detektoren benötigt, während das erfindungsgemäße Spektrometer mit erheblich weniger Detektoren und zugehörigen Meßelektroniken auskommt.

Vernünftigerweise werden bei normalen Ausführungsformen des erfindungsgemäßen Spektrometers einem Detektor jeweils zwischen 2 und 8 Wellenlängenselektoren zugeordnet sein. Um insbesondere auch ganz einfache und preiswerte Detektoren verwenden zu können, wie beispielsweise Proportionalzähler oder Szintilationszähler, muß die Anzahl der zugeordneten Wellenlängeselektoren relativ gering gewählt werden. Im einfachsten Fall von lediglich zwei Wellenlängenselektoren pro Detektor können die beiden Energien auch bei einem geringen Energieauflösungsvermögen des Detektors leicht getrennt werden, wenn die beiden Wellenlängenselektoren jeweils nur Licht am einen und am anderen Energieband des Detektors durchlassen.

Besonders bevorzugt ist eine Ausführungsform des erfindungsgemäßen Spektrometers, bei der als Detektoren Halbleiterdetektoren Verwendung finden. Da diese eine relativ hohe Energieauflösung besitzen, können auch erheblich mehr Wellenlängenselektoren pro Detektor zugeordnet werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine Ausführungsform des erfindungsgemäßen Spektrometers als Röntgenfluoreszenz-Spektrometer mit zwei Wellenlängenselektoren, die dem gleichen Detektor zugeordnet sind;
- Fig. 2: eine Ausführungsform mit acht Wellenlängenselektoren in Explosionsdarstellung;
- Fig. 3: schematische Diagramme der Energie- bzw. Wellenlängenauflösung von Detektor und Wellenlängenselektoren, wobei
a) einem Detektor zwei Wellenlängenselektoren
b) einem Detektor acht Wellenlängenselektoren
zugeordnet sind.

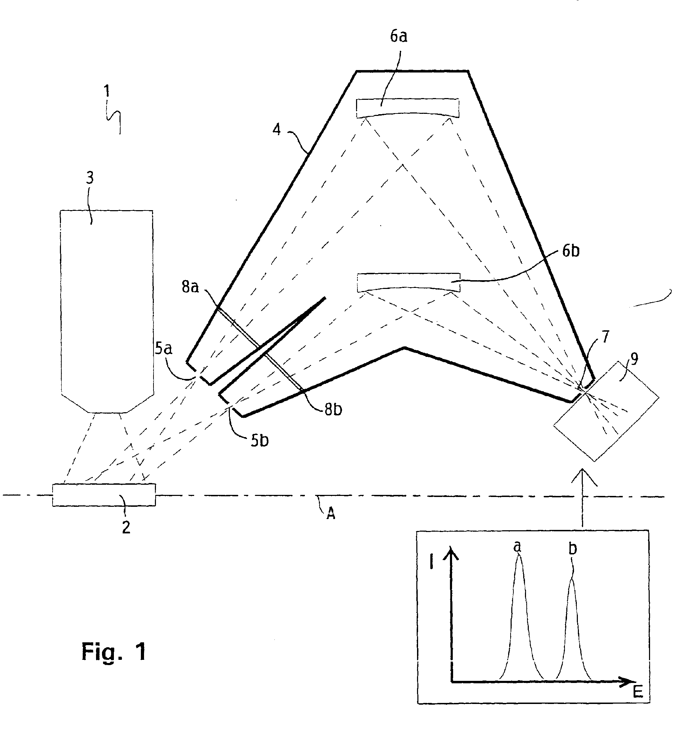

In Fig. 1 ist im schematischen Horizontalschnitt ein erfindungsgemäßen Röntgenfluoreszenz-Spektrometer 1 zur simultanen Messung mehrerer Spektrallinien von einer Meßprobe 2 dargestellt. Dazu wird Röntgenlicht aus einer Röntgenröhre 3 auf die Meßprobe 2 gestrahlt, die in festem oder flüssigem Aggregatzustand vorliegen kann. Von der Meßprobe 2 abgehendes Röntgenfluoreszenzlicht wird bei dieser Ausführungsform der Erfindung in einem Doppelmonochromator 4 auf zwei verschiedenen Pfaden zwei verschiedenen Wellenlängenselektoren zugeführt, die jeweils Licht eines bestimmten schmalen Wellenlängenbandes, das sich von einem Selektor zum anderen in der Regel unterscheidet, demselben Detektor 9 zuführen, der ein schematisch im rechten unteren Kästchen dargestelltes Energiespektrum des Röntgenfluoreszenzlichts aus den beiden Pfaden a und b aufnimmt.

Die Wellenlängenselektoren des Doppelmonochromators 4 umfassen jeweils eine fokussierende Optik mit einem Eintrittsspalt 5a, 5b, ein Analysatorelement 6a, 6b und einen gemeinsamen Austrittsspalt 7. Außerdem weisen die beiden Wellenlängenselektoren des Doppelmonochromators 4 Absorberelemente 8a, 8b auf, die so ausgelegt sind, daß die Intensitäten des durchgelassenen Lichts der beiden Wellenlängenselektoren sich maximal um eine Größenordnung unterscheiden, um die Dynamik des Detektors 9 nicht zu überreizen.

Die Analysatorelemente 6a, 6b können als Einkristalle oder Multilayer-Strukturen aufgebaut sein. Im gezeigten Ausführungsbeispiel weisen sie jeweils eine konkave Krümmung auf, um das aus den Eintrittsspalten 5a, 5b aufgesammelte Röntgenfluoreszenzlicht auf den gemeinsamen Austrittsspalt 7 abzubilden.

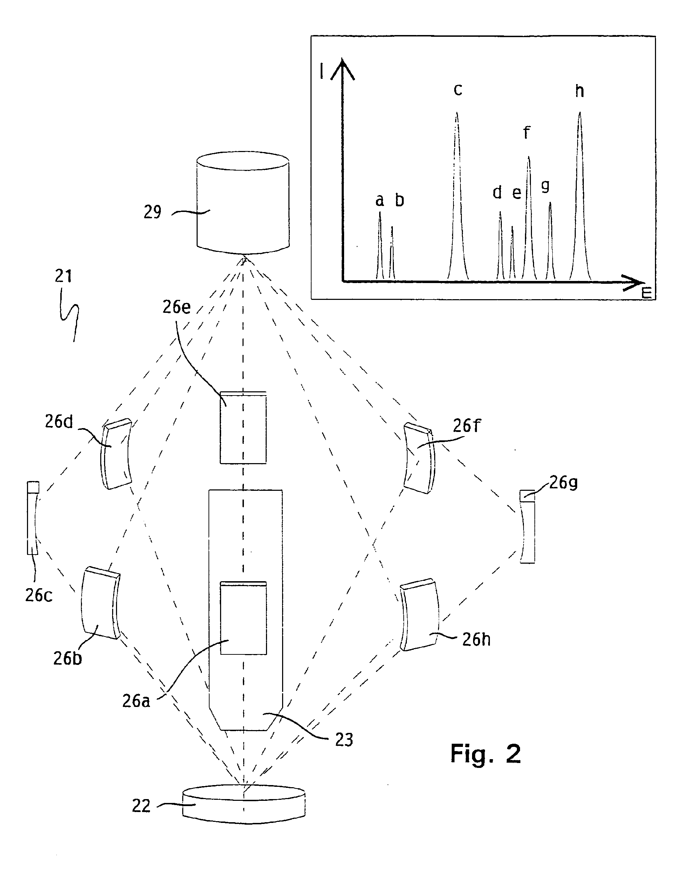

Anstelle von zwei Wellenlängenselektoren wie in Fig. 1 können bei anderen Ausführungsbeispielen auch erheblich mehr Wellenlängenselektoren demselben Detektor zugeordnet sein. Fig. 2 zeigt ein Ausführungsbeispiel eines Röntgenfluoreszenz-Spektrometers 21, bei dem Röntgenlicht aus einer Röntgenröhre 23 von einer Meßprobe 22 als Röntgenfluoreszenzlicht emittiert und auf acht verschiedenen Pfaden je nach Wellenlänge über acht verschiedene Wellenlängenselektoren, die in der Zeichnung lediglich durch die zugehörigen Analysatorelemente 26a bis 26h repräsentiert sind, demselben Detektor 29 zugeführt wird. Dabei sind die verschiedenen Wellenlängenselektoren im wesentlichen in einer Ebene sternförmig um eine Achse zwischen der Meßprobe 22 und dem Detektor 29 angeordnet. Ein Beispiel eines vom Detektor 29 aufgenommenen Spektrums des Lichts aus dem Pfaden a bis h ist in dem Diagramm im Kästchen rechts oben in Fig. 2 dargestellt.

Man erkennt die charakteristischen Linien von acht Elementen aus der Meßprobe 22, deren Signale über die acht verschiedenen Wellenlängenselektoren dem Detektor 29 simultan zugeführt wurden.

Im Extremfall können alle charakteristischen Linien von einem einzigen Detektor mit entsprechend hoher Auflösung verarbeitet werden, wie dies bei dem Beispiel von Fig. 2 der Fall ist. Es ist aber auch möglich, lediglich zwei charakteristische Linien, wie in Fig. 1 gezeigt, mit einem Detektor zu trennen, der dann ein entsprechend geringeres Auflösungsvermögen aufweisen kann.

In Fig. 1 ist lediglich ein Doppelmonochromator 4 mit einem zugehörigen Detektor 9 dargestellt. Bei einem erfindungsgemäßen Röntgenfluoreszenz-Spektrometer 1 können aber auch mehrere dieser Doppelmonochromatoren 4 mit ihrem zugehörigen Detektor 9 rotationssymetrisch um eine Achse A durch die Meßprobe 2 angeordnet sein. Dabei können dann die zu analysierenden Elemente so zusammengestellt werden, daß auch mit sehr einfachen Detektoren, wie beispielsweise Proportionalzählern oder Szintilationszählern die beiden Energien aus den beiden Wellenlängenselektoren getrennt werden können.

Die Detektoren 9, 29 können auch als Halbleiterdetektoren ausgeführt sein.

Wesentlich für die Erfindung ist, daß die Detektoren 9, 29 energiedispersiv sind und ein ausreichend großes Auflösungsvermögen besitzen, um das detektierte Licht der verschiedenen Wellenlängen aus den unterschiedlichen Wellenlängenselektoren energiemäßig zu trennen.

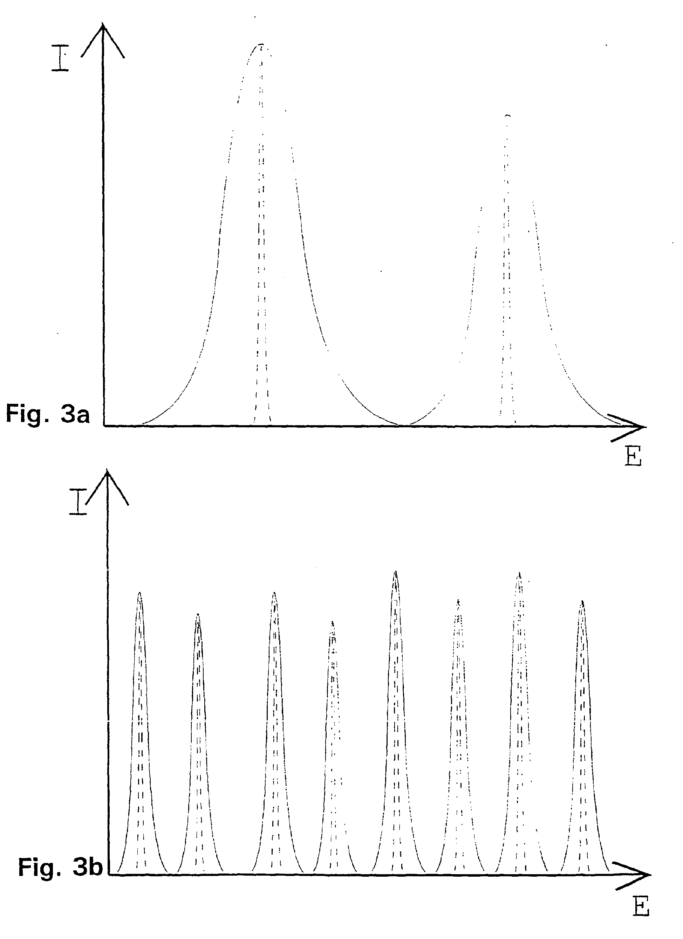

In den Figuren 3a und 3b sind Beispiele für die Energieauflösung in einem spektralen Diagramm (Intensität I über Energie E) aufgetragen.

Fig. 3a zeigt den Fall von lediglich zwei Wellenlängenselektoren, die dem gleichen Detektor zugeordnet sind (siehe Spektrometer 1 in Fig. 1), während Fig. 3b schematisch den Fall darstellt, daß einem einzigen Detektor insgesamt acht Wellenlängenselektoren zugeordnet sind (siehe auch Fig. 2). Um zu vernünftigen Ergebnissen zu kommen, wird in der Regel das Auflösungsvermögen der Wellenlängenselektoren (gestrichelte Kurven in den Figuren 3a und 3b) höher sein als das Auflösungsvermögen des jeweils zugeordneten Detektors (durchgezogene Kurven in den Figuren 3a und 3b).

Bei dem in Fig. 3a gezeigten Beispiel kann der Detektor durchaus eine mäßig gute Energieauflösung im Bereich ΔE = 1000-2000 eV bei E = 6 keV aufweisen. Wenn die Wellenlängenselektoren entsprechend gewählt sind, können die beiden zu trennenden Linien auch bei einer schlechten Energieauflösung des Detektors soweit auseinander liegen, daß sie insgesamt im Spektrum noch aufgelöst werden können.

Im Falle von Fig. 3b jedoch wird ein Detektor mit erheblich besserer Energieauflösung benötigt, beispielsweise ΔE < 200 eV, vorzugsweise ΔE ≤ 30 eV bei E = 5,9 keV. Dies wird selbstverständlich mit einem erheblich höheren Aufwand auf Seiten des Detektors erkauft, wobei allerdings für dieselbe Anzahl an unterschiedlichen Wellenlängenbändern erheblich weniger Detektoren erforderlich sind. Der Detektor im Beispiel von Fig. 3b bedient immerhin viermal so viele Wellenlängenselektoren wie der Detektor im Beispiel von Fig. 3a. Bei fortschreitender Weiterentwicklung der zur Verfügung stehenden Detektoren kann mit der erfindungsgemäßen Grundidee daher ein besonders kompaktes Spektrometer gebaut werden, mit dem dennoch eine große Vielzahl von unterschiedlichen Linien in verschiedenen Wellenlängenbereichen aufgenommen werden kann.

## Patentansprüche

1. Spektrometer zur simultanen Messung mehrerer Spektrallinien von einer Meßprobe (2; 22) mit mehreren Wellenlängenselektoren (5a, 6a, 7; 5b, 6b, 7; 26a - 26h), die jeweils Licht einer bestimmten Wellenlänge selektiv einem Detektor (9; 29) zuführen,
**dadurch gekennzeichnet,**
**daß** mindestens zwei verschiedene Wellenlängenselektoren (5a, 6a, 7; 5b, 6b, 7; 26a - 26h) demselben Detektor (9; 29) Licht von der Meßprobe (2; 22) zuführen können, und daß der Detektor (9; 29) energiedispersiv ist und ein ausreichend großes Auflösungsvermögen besitzt, um das detektierte Licht der verschiedenen Wellenlängen aus den mindestens zwei verschiedenen Wellenlängenselektoren (5a, 6a, 7; 5b, 6b, 7; 26a - 26h) energiemäßig zu trennen.

2. Spektrometer nach Anspruch 1, **dadurch gekennzeichnet, daß** das Spektrometer ein Röntgenfluoreszenz-Spektrometer (1; 21) und das Licht von der Meßprobe (2; 22) Röntgenfluoreszenzlicht ist.

3. Spektrometer nach Anspruch 1 oder 2, **dadurch gekennzeichnet, daß** mehrere Detektoren (9; 29) vorgesehen sind.

4. Spektrometer nach Anspruch 1 oder 2, **dadurch gekennzeichnet, daß** nur ein Detektor (9; 29) vorgesehen ist, der eine Energieauflösung ΔE < 200eV, vorzugsweise ΔE ≤ 30eV bei E = 5,9keV besitzt.

5. Spektrometer nach einem der vorhergehenden Ansprüche, **dadurch gekennzeichnet, daß** das Auflösungsvermögen der Wellenlängenselektoren (5a, 6a, 7; 5b, 6b, 7; 26a - 26h) höher ist als das Auflösungsvermögen des jeweils zugeordneten Detektors (9; 29).

6. Spektrometer nach einem der vorhergehenden Ansprüche, **dadurch gekennzeichnet, daß** die verschiedenen Wellenlängenselektoren (26a - 26h) im wesentlichen in einer Ebene sternförmig um eine Achse zwischen Meßprobe (22) und Detektor (29) angeordnet sind.

7. Spektrometer nach einem der vorhergehenden Ansprüche, **dadurch gekennzeichnet, daß** ein Wellenlängenselektor eine fokussierende Optik mit einem Eintrittsspalt (5a; 5b), einem Analysatorelement (6a; 6b; 26a - 26h) und einem Austrittsspalt (7) umfaßt.

8. Spektrometer nach Anspruch 7, **dadurch gekennzeichnet, daß** die Analysatorelemente (6a; 6b; 26a - 26h) Einkristalle sind.

9. Spektrometer nach Anspruch 7, **dadurch gekennzeichnet, daß** die Analysatorelemente (6a; 6b; 26a - 26h) Multilayer-Strukturen sind.

10. Spektrometer nach einem der Ansprüche 7 bis 9, **dadurch gekennzeichnet, daß** die Analysatorelemente (6a; 6b; 26a - 26h) eine Krümmung aufweisen.

11. Spektrometer nach einem der Ansprüche 7 bis 10, **dadurch gekennzeichnet, daß** mehrere Wellenlängenselektoren (5a, 6a, 7; 5b, 6b, 7), die demselben Detektor (9) zugeordnet sind, einen gemeinsamen Austrittsspalt (7) aufweisen.

12. Spektrometer nach einem der Ansprüche 7 bis 11, **dadurch gekennzeichnet, daß** mindestens ein Wellenlängenselektor (5a, 6a, 7; 5b, 6b, 7) ein Absorberelement (8a; 8b) aufweist.

13. Spektrometer nach Anspruch 12, **dadurch gekennzeichnet, daß** die Absorberelemente (8a; 8b) so ausgelegt sind, daß die Intensitäten des durchgelassenen Lichtes aller demselben Detektor (9) zugeordneten Wellenlängenselektoren (5a, 6a, 7; 5b, 6b, 7) sich um maximal eine Größenordnung unterscheiden.

14. Spektrometer nach einem der vorhergehenden Ansprüche, **dadurch gekennzeichnet, daß** zwischen 4 und 10 Wellenlängenselektoren (26a - 26h) vorgesehen sind.

15. Spektrometer nach einem der vorhergehenden Ansprüche, **dadurch gekennzeichnet, daß** einem Detektor (9; 29) zwischen 2 und 8 Wellenlängenselektoren (5a, 6a, 7; 5b, 6b, 7; 26a - 26h) zugeordnet sind.

16. Spektrometer nach einem der vorhergehenden Ansprüche, **dadurch gekennzeichnet, daß** die Detektoren (9; 29) Halbleiterdetektoren sind.

## Claims

1. A spectrometer for the simultaneous measurement of several spectral lines emitted from a sample (2; 22) with several wavelength selectors (5a, 6a, 7; 5b, 6b, 7; 26a - 26h) each selectively supplying light of a certain wavelength to a detector (9; 29), **characterized in that** at least two different wavelength selectors (5a, 6a, 7; 5b, 6b, 7; 26a - 26h) can supply light from the sample (2; 22) to the same detector (9; 29), and wherein the detector (9; 29) is energy-dispersive and has a sufficiently large resolution in order to separate the detected light with the various wavelengths from the at least two different wavelength selectors (5a, 6a, 7; 5b, 6b, 7; 26a - 26h) in terms of energy.

2. The spectrometer according to claim 1, **characterized in that** the spectrometer is an X-ray fluorescence spectrometer (1; 21) and the light of the sample (2; 22) is X-ray fluorescence light.

3. The spectrometer according to claim 1 or 2, **characterized in that** several detectors (9; 29) are provided.

4. The spectrometer according to claim 1 or 2, **characterized in that** only one detector (9; 29) is provided, which has an energy resolution ΔE < 200eV, preferably ΔE ≤ 30eV, at E = 5,9keV.

5. The spectrometer according to any one of the preceding claims, **characterized in that** the resolution of the wavelength selectors (5a, 6a, 7; 5b, 6b, 7; 26a - 26h) is higher than the resolution of the respectively associated detector (9; 29).

6. The spectrometer according to any one of the preceding claims, **characterized in that** the various wavelength selectors (26a-26h) are arranged essentially in a plane in the form of a star about an axis between the sample (22) and the detector (29).

7. The spectrometer according to any one of the preceding claims, **characterized in that** one wavelength selector comprises a focussing optical system having an entrance slit (5a; 5b), an analyzer element (6a; 6b; 26a - 26h) and an exit slit (7).

8. The spectrometer according to 7, **characterized in that** the analyzer elements (6a; 6b; 26a - 26h) are single crystals.

9. The spectrometer according to claim 7, **characterized in that** the analyzer elements (6a; 6b; 26a - 26h) are multilayer structures.

10. The spectrometer according to any one of the claims 7 through 9, **characterized in that** the analyzer elements (6a; 6b; 26a - 26h) are curved.

11. The spectrometer according to any one of the claims 7 through 10, **characterized in that** several wavelength selectors (5a, 6a, 7; 5b, 6b, 7) which are associated with the same detector have a common exit slit (7).

12. The spectrometer according to any one of the claims 7 through 11, **characterized in that** at least one wavelength selector (5a, 6a, 7; 5b, 6b, 7) comprises an absorbing element (8a; 8b).

13. The spectrometer according to claim 12, wherein the absorbing elements (8a; 8b) are arranged such that the intensities of the transmitted light of all wavelength selectors (5a, 6a, 7; 5b, 6b, 7) associated with the same detector (9) differ by maximally one order of magnitude.

14. The spectrometer according to any one of the preceding claims, **characterized in that** between 4 and 10 wavelength selectors (26a - 26h) are provided.

15. The spectrometer according to any one of the preceding claims, **characterized in that** between 2 and 8 wavelength selectors (5a, 6a, 7; 5b, 6b, 7; 26a - 26h) are associated with one detector (9; 29).

16. The spectrometer according to any one of the preceding claims, **characterized in that** the detectors (9; 29) are semiconductor detectors.

## Revendications

1. Spectromètre pour la mesure simultanée de plusieurs raies spectrales d'un échantillon à mesurer (2 ; 22) avec plusieurs sélecteurs de longueur d'onde (5a, 6a, 7 ; 5b, 6b, 7 ; 26a - 26h) qui amènent chacun sélectivement de la lumière d'une longueur d'onde définie à un détecteur (9 ; 29),
**caractérisé par le fait**
**qu'**au moins deux sélecteurs de longueur d'onde (5a, 6a, 7 ; 5b, 6b, 7 ; 26a - 26h) différents peuvent amener au même détecteur (9 ; 29) de la lumière de l'échantillon à mesurer (2 ; 22) et que le détecteur (9 ; 29) est dispersif en énergie et possède un pouvoir de résolution suffisamment grand pour séparer énergétiquement ou en fonction de l'énergie la lumière détectée des différentes longueurs d'onde provenant des au moins deux sélecteurs de longueur d'onde (5a, 6a, 7 ; 5b, 6b, 7 ; 26a - 26h) différents.

2. Spectromètre selon la revendication 1, **caractérisé par le fait que** le spectromètre est un spectromètre de fluorescence X (1 ; 21) et que la lumière de l'échantillon à mesurer (2 ; 22) est de la lumière fluorescente X.

3. Spectromètre selon la revendication 1 ou 2, **caractérisé par le fait qu'**il est prévu plusieurs détecteurs (9 ; 29).

4. Spectromètre selon la revendication 1 ou 2, **caractérisé par le fait qu'**il n'est prévu qu'un seul détecteur (9 ; 29) qui possède une résolution énergétique ΔE < 200 eV, de préférence ΔE ≤ 30 eV pour E = 5,9 keV.

5. Spectromètre selon l'une des revendications précédentes, **caractérisé par le fait que** le pouvoir de résolution des sélecteurs de longueur d'onde (5a, 6a, 7 ; 5b, 6b, 7 ; 26a - 26h) est plus élevé que le pouvoir de résolution du détecteur (9 ; 29) respectivement associé.

6. Spectromètre selon l'une des revendications précédentes, **caractérisé par le fait que** les différents sélecteurs de longueur d'onde (26a - 26h) sont essentiellement disposés en étoile dans un plan autour d'un axe entre échantillon à mesurer (22) et détecteur (29).

7. Spectromètre selon l'une des revendications précédentes, **caractérisé par le fait qu'**un sélecteur de longueur d'onde comprend une optique de focalisation avec une fente d'entrée (5a ; 5b), un élément analyseur (6a ; 6b ; 26a - 26h) et une fente de sortie (7).

8. Spectromètre selon la revendication 7, **caractérisé par le fait que** les éléments analyseurs (6a ; 6b ; 26a - 26h) sont des monocristaux.

9. Spectromètre selon la revendication 7, **caractérisé par le fait que** les éléments analyseurs (6a ; 6b ; 26a - 26h) sont des structures multicouches.

10. Spectromètre selon l'une des revendications 7 à 9, **caractérisé par le fait que** les éléments analyseurs (6a ; 6b ; 26a - 26h) présentent une courbure.

11. Spectromètre selon l'une des revendications 7 à 10, **caractérisé par le fait que** plusieurs sélecteurs de longueur d'onde (5a, 6a, 7 ; 5b, 6b, 7) qui sont associés au même détecteur (9) présentent une fente de sortie (7) commune.

12. Spectromètre selon l'une des revendications 7 à 11, **caractérisé par le fait qu'**au moins un sélecteur de longueur d'onde (5a, 6a, 7 ; 5b, 6b, 7) présente un élément absorbeur (8a ; 8b).

13. Spectromètre selon la revendication 12, **caractérisé par le fait que** les éléments absorbeurs (8a ; 8b) sont conçus de telle manière que les intensités de la lumière transmise par tous les sélecteurs de longueur d'onde (5a, 6a, 7 ; 5b, 6b, 7) associés au même détecteur (9) diffèrent au maximum d'un ordre de grandeur ou de magnitude.

14. Spectromètre selon l'une des revendications précédentes, **caractérisé par le fait qu'**il est prévu entre 4 et 10 sélecteurs de longueur d'onde (26a - 26h).

15. Spectromètre selon l'une des revendications précédentes, **caractérisé par le fait qu'**entre 2 et 8 sélecteurs de longueur d'onde (5a, 6a, 7 ; 5b, 6b, 7 ; 26a - 26h) sont associés à un détecteur (9 ; 29).

16. Spectromètre selon l'une des revendications précédentes, **caractérisé par le fait que** les détecteurs (9 ; 29) sont des détecteurs à semi-conducteur.
